# EUROPÄISCHE PATENTSCHRIFT

(11) **EP 1 571 357 B1**
(45) Veröffentlichungstag und Bekanntmachung des Hinweises auf die Patenterteilung: **15.08.2007**
(21) Anmeldenummer: 05101719.2
(22) Anmeldetag: 04.03.2005
(51) Int. Cl.: F16C 29/02, A47B 88/04, B60N 2/06

(54) **Teleskopschiene mit Gleitern**
Telescopic slide with gliders
Glissière télescopique avec glisseurs

(30) Priorität: 04.03.2004 DE 102004010503
(43) Veröffentlichungstag der Anmeldung: 07.09.2005
(73) Patentinhaber: Accuride International GmbH, 65582 Diez (DE)
(72) Erfinder: MÜCKE, Michael, 65549 Limburg (DE); PETRI, Friedhelm, 65558 Bad Camberg (DE)
(74) Vertreter: Weber, Roland

(56) Entgegenhaltungen:
- EP-A- 1 148 258
- DE-A1- 2 331 785
- DE-A1- 3 003 304
- DE-U1- 29 812 762

## Beschreibung

Die Erfindung betrifft eine Teleskopschiene mit wenigstens zwei in Längsrichtung gegeneinander verschiebbaren Schienenelementen, welche wenigstens eine Außenschiene und wenigstens eine Innenschiene umfassen, wobei die Schienenelemente Stütz- bzw. Gleitflächen aufweisen und wobei zwischen den Stütz- bzw. Gleitflächen von jeweils zwei gegeneinander verschiebbar angeordneten Schienenelementen Gleiter vorgesehen sind, die wenigstens zwei separate Gleitereinzelelemente aufweisen.

Teleskopschienen werden unter anderem im Möbelbau, bei Haushaltsgeräten, z. B. für Backofenauszüge, und im Automobil- und Flugzeugbau, z. B. an verstellbaren Sitzen oder Schubladen, eingesetzt. Aus dem Stand der Technik sind verschiedenste Teleskopschienensysteme bekannt. Je nach Einsatzgebiet werden sehr unterschiedliche Anforderungen gestellt. Bei Schubfächern können dies beispielsweise Leichtgängigkeit des Auszugs und ggf. hohe Tragkraft sein. Darüber hinaus sollen Teleskopschienen in der Regel auch bei häufigen Öffnungs- und Schließvorgängen eines Schubes eine lange Lebensdauer besitzen und ihre Leichtgängigkeit über die Lebensdauer beibehalten. An einen über Teleskopschienen geführten Backofenauszug müssen die Teleskopschienen darüber hinaus hohen Temperaturen und starker Verschmutzung standhalten. Im Automobil- und Flugzeugbau steht z. B. bei verschiebbaren Sitzen die Tragkraft der Schienen im Vordergrund.

Bei herkömmlichen Teleskopschienen mit gegeneinander verfahrbaren bzw. verschiebbaren Schienenelementen wird die Leichtgängigkeit des Verfahrens durch Kugellager gewährleistet. Die Gleiteigenschaften und insbesondere die Tragkraft der Teleskopschienen werden neben der Gesamtdimensionierung durch die Anzahl der Kugeln eines Kugelsatzes wesentlich mitbestimmt. Die Kugeln werden üblicherweise in Kugelkäfigen geführt. Nachteilig bei der Verwendung von kugelgelagerten Teleskopschienen ist das Ansammeln von Staub und Schmutz in den Kugellagern, was im Laufe der Zeit zu einer Verschlechterung der Laufeigenschaften führt. In der Praxis ist eine Reinigung der Kugellager durch den Anwender in der Regel nicht möglich.

Eine hohe Traglast erfordert bei herkömmlichen kugelgelagerten Teleskopschienen zum einen große Abmessungen der Schienenelemente und eine hohe Anzahl der verwendeten Kugeln. Ein weiterer Nachteil von kugelgelagerten Schienen ist, daß es bei starker Belastung mit hohen Gewichten zu Einprägungen in den Kugellaufflächen der Profilschienen aufgrund der Punktbelastung durch die Kugeln kommen kann. Solche sogenannten Rattermarken verschlechtern die Laufeigenschaften der Teleskopschienen erheblich. Rattermarken wirkt man bisher dadurch entgegen, daß man Schienenelemente aus sehr hartem Material, in der Regel Stahl, verwendet. Diese haben den Vorteil, daß sie auch bei schwerwiegender Fehlnutzung mit zeitweiliger Überbelastung eine erhöhte Toleranz gegenüber Verbiegen und Bruch aufweisen. Nachteilig wirkt sich bei der Verwendung des Werkstoffs Stahl insbesondere dessen hohes Gewicht aus, was gerade im Automobil- und Flugzeugbau unerwünscht ist und zu Lasten der übrigen Nutzlast geht.

Die EP 1 148 258 A beschreibt eine Teleskopröhre, die aus einer äußeren und einer inneren Röhre besteht. Zwischen den Röhren sind Gleitringe angebracht, deren Dicke den Unterschied zwischen innerem Durchmesser der äußeren Röhre und äußerem Durchmesser der inneren Röhre überschreitet. Die Gleitringe sind jeweils in umlaufenden Rillen an der inneren Oberfläche der äußeren Röhre oder der äußeren Oberfläche der inneren Röhre angebracht.

Die DE 298 12 762 U offenbart eine teleskopierbare Hubsäule mit einem Außenrohr, einem Innenrohr und gegebenenfalls einem oder mehreren Zwischenrohren, wobei zwischen den einzelnen Rohren Abstandspalte vorgesehen sind, und zwischen jeder der einen umlaufenden Abstandsspalt begrenzenden Flächen mindestens zwei im Abstand zueinander stehende einstellbare Gleitschuhe vorgesehen sind.

Die DE 3003304 A beschreibt einen Teleskopmast, der aus mehreren ineinandergeschobenen Rohren besteht. Zwischen den Rohren befinden sich Führungsnuten und an den untersten Teilen auf der Außenseite der Rohre und an den obersten Teilen auf der Innenseite der Rohre sind Führungsklötze angeordnet.

Der vorliegenden Erfindung liegt die Aufgabe zugrunde, eine gegenüber dem Stand der Technik verbesserte Teleskopschiene bereitzustellen, die in kompakter Bauweise und mit geringem Gewicht herstellbar ist und gleichzeitig hohe Tragkraft und akzeptable Laufeigenschaften ohne die Ausbildung von Rattermarken und ohne störende Geräuschentwicklung als Resultat aus dem Spiel zwischen Schienen und Lagerteilen aufweist.

Diese Aufgabe wird gelöst durch eine Teleskopschiene mit wenigstens zwei in Längsrichtung gegeneinander verschiebbaren Schienenelementen, welche wenigstens eine Außenschiene und wenigstens eine Innenschiene umfassen, wobei die Schienenelemente Stütz- bzw. Gleitflächen aufweisen und wobei zwischen den Stütz- bzw. Gleitflächen von jeweils zwei gegeneinander verschiebbar angeordneten Schienenelementen Gleiter vorgesehen sind, die wenigstens zwei separate Gleitereinzelelemente aufweisen, dadurch gekennzeichnet, daß die zwei separaten Gleitereinzelelemente (4', 4"), die zwischen zwei Stütz- bzw. Gleitflächen (3, 3') zweier Schienenelemente vorgesehen sind, in Längsrichtung der Schienenelemente ungleiche Längen aufweisen und vorzugsweise ein Längenverhältnis zueinander von 2 : 1 bis 9 : 1 haben, wobei das längere der zwei separaten Gleitereinzelelemente (4', 4") an dem bzw. in der Nähe des Endes eines Schienenelementes (1, 2) fixiert ist, das in Richtung des Verfahrweges der Teleskopschiene gelegen ist, und das kürzere der zwei separaten Gleitereinzelelemente (4', 4") an dem bzw. in der Nähe des Endes eines Schienenelementes (1,2) fixiert ist, das entgegen der Richtung des Verfahrweges der Teleskopschiene gelegen ist.

Mit "Stütz- bzw. Gleitflächen" werden hierin die Flächen der Schienenelemente bezeichnet, an denen die Gleiter bzw. Gleitereinzelelemente entlang gleiten. Bei kugelgelagerten Teleskopschienen entspricht dies den Laufflächen, an denen die Kugeln beim Verfahren der Schienenelemente abrollen.

Mit "Außenschiene" wird hierin ein Schienenelement bezeichnet, das wenigstens eine Innenschiene umgreift. Eine Außenschiene kann ein im Querschnitt im wesentlichen C-förmiges Profil haben, bei dem die Endabschnitte des C-förmigen Profils die Stütz- bzw. Gleitflächen umfassen und eine Innenschiene umgreifen. Eine Außenschiene kann erfindungsgemäß auch doppelt C-förmiges Profil aufweisen und beidseitig zwei Innenschienen umgreifen und mit diesen über Gleiter verfahrbar verbunden sein. Ein Außenschienenelement weist zu einem Innenschienenelement hin üblicherweise zwei Stütz- bzw. Gleitflächen auf, und das Innenschienenelement weist zwei hierzu passende, den Stütz- bzw. Gleitflächen der Außenschiene zugewandte Stütz- bzw. Gleitflächen auf. Gegeneinander verfahrbare Außen- und Innenschienenelemente mit jeweils drei, vier oder mehr Stütz- bzw. Gleitflächen sind ebenfalls realisierbar.

Als "Gleiter" und "Gleitereinzelelemente" werden hierin Elemente bezeichnet, die zwischen den Stütz- bzw. Gleitflächen von Außen- und Innenschienen angeordnet sind. "Gleiter" und "Gleitereinzelelemente" sind keine Kugeln und können nicht an den Stütz- bzw. Gleitflächen abrollen, sondern an diesen Flächen entlang gleiten. Vorteilhaft haben Gleitereinzelelemente eine in Längsrichtung der Stütz- bzw. Gleitflächen orientierte längliche Form. Vorteilhafterweise sind sie aus einem Material hergestellt, das einen niedrigeren Reibungskoeffizienten aufweist als das Material der Schienenelemente bzw. der Oberflächen der Stütz- bzw. Gleitflächen selbst.

Ein Vorteil der Verwendung von Gleitern anstelle von Kugeln zur Lagerung einer Teleskopschiene besteht darin, daß bei Gleitern eine flächige Lastverteilung auf den Stütz- bzw. Gleitflächen stattfindet, wogegen die hohe Punktbelastung bei Kugeln zu Beschädigungen an den Stütz- bzw. Gleitflächen führen kann (Rattermarken). Hierdurch wird ein deutlich besseres Traglastverhalten erzielt, was sich insbesondere darin äußert, daß bei gleichem Platzbedarf höhere Traglasten möglich werden. Darüber hinaus hat die erfindungsgemäße Verwendung von Gleitern den Vorteil erheblich geringerer Geräuschentwicklung bei dynamischer Belastung (Vibrationsbelastung).

Ein weiterer Vorteil der erfindungsgemäßen Teleskopschienen gegenüber herkömmlichen Gleitschienen, bei denen die Gleitflächen der gegeneinander verfahrbaren Schienenelemente unmittelbar gegeneinander gleiten, ist der erheblich geringere Reibungswiderstand, der durch das Vorsehen von Gleitern erreicht werden kann. Die Gleiter bzw. Gleitereinzelelemente können aus einem Material und in einer Bauart mit geringem Reibungswiderstand hergestellt sein, wogegen man bei dem Material der Schienenelemente aufgrund weiterer Anforderungen, wie Belastbarkeit, Verwindungsfestigkeit usw. stark eingeschränkt ist.

Die Gleiter sind bei der vorliegenden Erfindung in Gleitereinzelelemente aufgeteilt. Die Gleitereinzelelemente liefern eine hinreichende Gleitfläche zwischen Innen- und Außenschienen und hohe Leistungsfähigkeit hinsichtlich Maximallast und Führungsstabilität. Gleichzeitig erlaubt die Aufteilung der Gleiter in Gleitereinzelelemente eine Reduzierung ihrer Masse. Ein weiterer Vorteil der Aufteilung eines Gleiters in zwei oder mehr separate Gleitereinzelelemente liegt in einer besseren Lastenverteilung, Führung und Abstützung zweier Schienenelemente gegeneinander über ihre Länge. Bei Verwendung eines einzigen, nicht aufgeteilten Gleiters findet hingegen die gesamte Kraftübertragung zwischen zwei Schienenelementen bei Belastung an dem einen Gleiter statt.

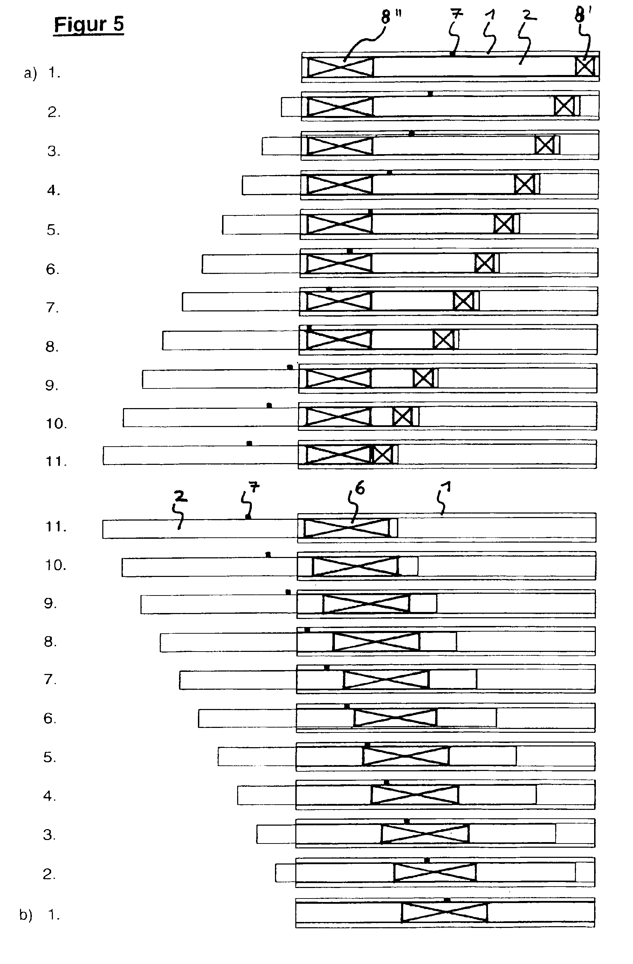

Nimmt man an, das sich der Lastangriffspunkt in der Mitte einer auszuziehenden Schiene eines Schienenelements befindet, so liegt der Lastangriffspunkt bei einem Schienenelement mit einem einzelnen, nicht aufgeteilten Gleiter (z.B. ein Kugelkäfig) bei Auszug des Schienenelements früher außerhalb des Bereichs, über den sich der Gleiter erstreckt als bei einem Schienenelement mit einem in zwei oder mehr separate Gleitereinzelelemente aufgeteilten Gleiter außerhalb des Bereichs, der von den Gleitereinzelelementen umfaßt wird. D.h., daß bei einem Schienenelement mit Gleitern, die in zwei oder mehr separate Gleitereinzelelemente aufgeteilt sind die Lastkraftpositionierung besser ist, als bei Schienenelementen mit einem einzelnen, nicht aufgeteilten Gleiter (z.B. ein Kugelkäfig), obwohl die Auflage- bzw. Kontaktfläche der Summe aller Gleitereinzelelemente nicht größer sondern höchstens gleich groß wie die Auflage- bzw. Kontaktfläche des einzelnen, nicht aufgeteilten Gleiters ist (vergleiche hierzu Figur 5).

Zusätzlich verbessert sich durch ein Schienenelement mit einem in zwei oder mehr separate Gleitereinzelelemente aufgeteilten Gleiter im Vergleich zu einem einzelnen, nicht aufgeteilten Gleiter die Seitenführung, obwohl die Auflage- bzw. Kontaktfläche der Summe aller Gleitereinzelelemente nicht größer sondern höchstens gleich groß wie die Auflage- bzw. Kontaktfläche des einzelnen, nicht aufgeteilten Gleiters ist (vergleiche auch hierzu Figur 5). Während ein einzelner, nicht aufgeteilter Gleiter (z.B. ein Kugelkäfig) im wesentlichen eine Achse bildet, um die zwei ineinander geführte Schienen gegeneinander seitlich verwackelbar sind, werden zwei ineinander geführte Schienen durch in zwei oder mehr separate Gleitereinzelelemente aufgeteilte Gleiter eben an zwei oder mehr separaten Punkte ihrer Längsachse stabilisiert und können folglich weniger stark seitlich verwackeln. Schienenelemente mit einem einzelnen Gleiter sind insbesondere im eingezogenen Zustand und in der ersten Phase des Auszugs anfälliger für seitliches Verwackeln. Dahingegen liegt bei Schienenelementen mit einem in zwei oder mehr separate Gleitereinzelelemente aufgeteilten Gleiter die optimale Seitenstabilisierung gerade im eingezogenen Zustand vor und nähert sich im Laufe des Auszugs dem Wert eines einzelnen, nicht aufgeteilten Gleiters, wenn die Auflage- bzw. Kontaktfläche der Summe aller Gleitereinzelelemente im wesentlichen gleich groß der Auflage- bzw. Kontaktfläche des einzelnen, nicht aufgeteilten Gleiters ist. Besonders vorteilhaft ist dieses Merkmal bei relativ langen Schienen, die besonders anfällig für seitliches Verwackeln sind.

Die zwei separaten Gleitereinzelelemente, die zwischen zwei Stütz- bzw. Gleitflächen zweier Schienenelemente vorgesehen sind, weisen in Längsrichtung der Schienenelemente ungleiche Längen auf. Besonders vorteilhaft ist dabei ein Längenverhältnis der zwei separaten Gleitereinzelelemente zueinander von 2:1 bis 9:1. Das längere der Gleitereinzelelemente ist vorzugsweise dafür vorgesehen und positioniert, um den Hauptanteil der Tragkraftbelastung der Schiene aufzunehmen, vor allem im ausgefahrenen Zustand. Das kürzere der Gleitelemente ist vorzugsweise dafür vorgesehen und positioniert, ein Schienenelement in einem Bereich in einem Abstand zu dem längeren Gleitereinzelelement gegenüber dem anderen Schienenelement abzustützen und in seiner vorgesehenen Lage bezüglich der Längsachsen der Schienenelemente zu halten.

Bei der Aufteilung der Gleiter auf Gleitereinzelelemente, die sich nicht über die Gesamtlänge der Gleitschiene erstrecken, ist darauf zu achten, daß die Auflagekraftverteilung der Teleskopschienen nach wie vor die gewünschte Gewichtsbelastbarkeit liefert. Die erfindungsgemäßen Gleitereinzelelemente sind in Bezug auf das flächige Abtragen von auf die Teleskopschiene wirkenden Lasten den herkömmlichen kugelgelagerten Teleskopschienen deutlich überlegen.

Jeweils eines der zwei separaten Gleitereinzelelemente, das zwischen zwei Stütz- bzw. Gleitflächen zweier Schienenelemente vorgesehen ist, ist gegen ein Verschieben bezüglich eines der zwei Schienenelemente fixiert, während das andere der zwei separaten Gleitereinzelelemente gegen ein Verschieben bezüglich des anderen Schienenelements fixiert ist. Die Fixierung der separaten Gleitereinzelelemente gegen ein Verschieben bezüglich jeweils eines der Schienenelemente kann durch spezielle Fixierelemente oder durch anheften bzw. ankleben von Gleitereinzelelementen an Schienenelemente erreicht werden. Beispielsweise können an den Gleitereinzelelementen Fixierzapfen vorgesehen sein, die in entsprechende Bohrungen an einem Schienenelement eingreifen und so eine Verschiebung der Gleitereinzelelemente relativ zu dem entsprechenden Schienenelement verhindern. Andere Fixierungen sind denkbar und liegen im Können des Fachmanns.

Die Fixierung der Gleitereinzelelemente an einer bestimmten Position bezüglich der Länge des jeweiligen Schienenelementes ist vorteilhaft, um optimale Gleiteigenschaften zu erzielen und z.B. das Verkanten der Stütz- bzw. Gleitflächen gegeneinander zu verhindern. Die Fixierung der Gleitereinzelelemente ist neben einer definierten Größe dieser Gleitereinzelelemente und dem Größenverhältnis der Gleitereinzelelemente zueinander ein wesentlicher Gesichtspunkt, der die Qualität der Gleiteigenschaften und der Lastenabtragung bestimmt.

Dabei sind die zwei separaten Gleitereinzelelemente an den oder in der Nähe der im eingefahrenen Zustand jeweils einander gegenüberliegenden Enden der zwei Schienenelemente gegen ein Verschieben bezüglich der jeweiligen Schienenelemente fixiert. Die Positionierung der Gleitereinzelelemente an den jeweils einander gegenüberliegenden Enden der Schienenelemente ist vorteilhaft, da hier bei Belastung die stärksten Kräfte wirken.

Die Gleitereinzelelemente sind so an den Schienen angeordnet, daß das längere der zwei separaten Gleitereinzelelemente an dem Ende eines Schienenelements fixiert ist, das in Richtung des Verfahrweges der Teleskopschiene gelegen ist, und das kürzere der zwei separaten Gleitereinzelelemente an dem Ende des anderen Schienenelementes fixiert ist, das entgegen der Richtung des Verfahrweges der Teleskopschiene gelegen ist. Alternativ liegt die Position der Gleitereinzelelemente nicht unmittelbar am Ende eines Schienenelements, sondern in der Nähe der Enden der Schienenelemente, d. h. in einem Abstand zu dem Ende.

Beispielsweise wirken bei einer über eine Teleskopschiene bewegbaren Fuß- bzw. Beinablage bei z. B. einem Auto- oder Flugzeugsitz vor allem an den in Ausfahrrichtung vorderen Abschnitten der stationären Schienenelemente der Teleskopschienen sehr starke Hebelkräfte. Daher wird die Fläche der Gleitereinzelelemente, über die diese Kräfte flächig abgetragen werden können, erhöht, indem in diesem Bereich die Gleitereinzelelemente länger als im nicht so stark belasteten hinteren Bereich sind. Im hinteren Bereich erfüllen die kürzeren Gleitereinzelelemente im wesentlichen eine die Schienenelemente gegeneinander abstützende Funktion. Als besonders vorteilhaft hat sich diesbezüglich ein Größenverhältnis von vorderem zu hinterem Gleitelement in einem Bereich von etwa 2 : 1 bis etwa 9 : 1 herausgestellt.

Bei einer bevorzugten Ausführungsform der vorliegenden Erfindung weist jeder Gleiter, der zwischen zwei Stütz- bzw. Gleitflächen zweier Schienenelemente vorgesehen ist, genau zwei separate Gleitereinzelelemente auf. Zwei Gleitereinzelelemente sind in der Regel ausreichend, um der Teleskopschiene ausreichende Führungsstabilität und Belastbarkeit zu verleihen. Prinzipiell kann der Gleiter zwischen zwei Stütz- bzw. Gleitflächen zweier Schienenelemente jedoch auch in mehrere separate Gleitereinzelelemente aufgeteilt sein.

Zweckmäßigerweise erstrecken sich die Gleitereinzelelemente, die zwischen den Stütz- bzw. Gleitflächen der Schienenelemente angeordnet sind, in Längsrichtung der Schienenelemente. Im Querschnitt weisen diese Gleitereinzelelemente bevorzugt ein Außenprofil auf, das im wesentlichen den entsprechenden Anlageflächen der Stütz- bzw. Gleitflächen angepaßt ist, um eine möglichst hohe Abstützung bei niedrigem Reibungswiderstand zu erreichen.

Teleskopschienen mit genau einer Außenschiene und einer Innenschiene lassen nur einen Teilauszug zu, d. h. sie lassen sich bis zu einer maximalen Länge ausziehen, die kleiner ist als die doppelte Länge der Schiene im eingefahrenen Zustand. Teilauszugschienen sind für viele Anwendungen erwünscht und ausreichend. Sogenannte Vollauszugsschienen lassen sich bis zu einer maximalen Länge ausziehen, die größer oder gleich der doppelten Länge der Schiene im eingefahrenen Zustand ist. Da der Verfahrweg zweier Schienenelemente gegenüber der Gesamtlänge der einzelnen Schienenelemente immer um wenigstens die Länge der dazwischen angeordneten Gleiterelemente oder bei kugelgelagerten Teleskopschienen der Kugelkäfige vermindert ist, läßt sich ein Vollauszug nur mit wenigstens drei gegeneinander verfahrbaren Schienenelementen realisieren. Aber auch bei einer Teilauszugschiene können aus verschiedenen Gründen drei oder mehr Schienenelemente vorgesehen sein, beispielsweise zur Erhöhung der Traglast.

Eine weitere bevorzugte Ausführungsform der Erfindung betrifft daher eine Teleskopschiene, die eine Außenschiene aufweist, in der eine erste Innenschiene und eine zweite Innenschiene auf jeweils einander gegenüberliegenden Seiten der Außenschiene geführt sind. Die Teleskopschiene dieser Ausführungsvariante umfaßt somit drei Schienenelemente und läßt sich mit Vorteil als Vollauszug realisieren. Zweckmäßigerweise wird hierbei eines der zwei Innenschienenelemente als stationäres Schienenelement eingesetzt, wogegen das Außenschienenelement und das zweite Innenschienenelement bewegliche Schienenelemente darstellen. Bezüglich des Außenschienenelementes sind die beiden Innenschienenelemente in jeweils entgegengesetzte Richtungen verfahrbar.

Bei einer weiteren bevorzugten alternativen Ausführungsform einer erfindungsgemäßen Teleskopschiene mit wenigstens drei Schienenelementen weist die Teleskopschiene eine Außenschiene, eine Innenschiene und wenigstens eine Mittelschiene auf. Außen- und Innenschiene sind ausgebildet, wie es zuvor beschrieben wurde. Die wenigstens eine Mittelschiene ist zwischen Außenschiene und Innenschiene angeordnet. Bezüglich der Stütz- bzw. Gleitflächen ist die Mittelschiene im Verhältnis zur Außenschiene wie oder ähnlich wie eine Innenschiene und im Verhältnis zur Innenschiene wie oder ähnlich wie eine Außenschiene profiliert. Bei dieser Ausführungsform wird entweder die Außenschiene oder die Innenschiene als stationäres Schienenelement eingesetzt. Bezüglich des Außenschienenelementes sind das wenigstens eine Mittelschienenelement und das Innenschienenelement in gleicher Richtung verfahrbar. Die Teleskopschiene weist vorzugsweise genau ein Mittelschienenelement auf. Es können jedoch auch mehrere Mittelschienenelemente vorgesehen sein, um eine größere Auszugslänge zu erzielen.

Zweckmäßigerweise sind die Schienenelemente der erfindungsgemäßen Teleskopschienen aus Metall gefertigt. Besonders bevorzugt ist hierbei Aluminium, da es die Herstellung von Teleskopschienen mit hoher Belastbarkeit bei gleichzeitig niedrigem Gewicht erlaubt.

Bei einer weiterhin bevorzugten Ausführungsform der Erfindung sind die Gleiter bzw. Gleitereinzelelemente aus Metall, vorzugsweise aus Messing, hergestellt. Bei einer alternativen bevorzugten Ausführungsform der Erfindung sind die Gleiter bzw. Gleitereinzelelemente aus Kunststoff hergestellt, wie z. B Polytetrafluorethylen (PTFE), Polyoxymethylen/Polyacetat (POM) oder Polyamid. Die Materialien für die Gleiter bzw. Gleitereinzelelemente werden vom Fachmann je nach den Anforderungen an Belastbarkeit, Laufverhalten usw. der Teleskopschienen ausgewählt. Die vorgenannten bevorzugten Materialien bieten ein gutes Gleitverhalten bei gleichzeitig hoher Belastbarkeit.

Um eine zusätzliche Stabilisierung der Gleitereinzelelemente zu erzielen, können die Gleitereinzelelemente, die an einem Schienenelement auf gegenüberliegenden Stütz- oder Gleitflächen dieses Schienenelements angeordnet sind, mit Vorteil über ein Verbindungsstück miteinander verbunden sein. Das Verbindungsstück erstreckt sich zweckmäßigerweise von einem Gleitereinzelelement zwischen den zwei zugehörigen Schienenelementen zu dem zweiten Gleitereinzelelement.

Die erfindungsgemäßen Teleskopschienen weisen aufgrund der Anordnung der Schienen zueinander und der zwischen den Schienenelementen befindlichen Gleitereinzelelemente allgemein hervorragende Gleiteigenschaften und Tragkraft auf. Die Verwendung von Gleitereinzelelementen beugt der Ausbildung von Rattermarken aufgrund des flächigen Abtragens der auf die Stütz- bzw. Gleitflächen wirkenden Kräfte vor. Außerdem wird hierdurch das sogenannte Auswalzen vermieden. Aufgrund der Kraftverteilung auf einer geringeren Fläche bei herkömmlichen Teleskopschienen im Vergleich zu der erfindungsgemäßen Teleskopschiene kommt es bei dauerhafter Benutzung von herkömmlichen Teleskopschienen dazu, daß die Stütz- bzw. Gleitflächen entlang der wirkenden Kraftvektoren gebogen werden. Diese Erscheinung wird auch als Auswalzen bezeichnet und tritt bei herkömmlichen kugelgelagerten Profilschienen auf, nicht aber bei den mit Gleitereinzelelementen versehenen erfindungsgemäßen Teleskopschienen. Dieses verbesserte Traglastverhalten der erfindungsgemäßen Teleskopschienen geht einher mit einer gesteigerten Seitenstabilität. Zudem erlaubt das erfindungsgemäße Teleskopschienenprinzip die Verwendung von Aluminium zur Fertigung der Schienenelemente, was mit einer deutlichen Gewichtsreduzierung im Vergleich zum Stand der Technik einhergeht, da Aluminium um ein Drittel leichter als der herkömmlich verwendete Stahl ist.

Die bei der Beschreibung von Ausführungsformen der vorliegenden Erfindung aufgeführten Merkmale sind sämtlich untereinander frei kombinierbar, wobei sich die Vorteile der entsprechenden Merkmalskombinationen für den Fachmann aus der Kombination sowie der einer speziellen Ausführungsform zugrunde liegenden Aufgabe ergeben. Weitere Vorteile, Merkmale und Anwendungsmöglichkeiten der vorliegenden Erfindung werden anhand der folgenden Beschreibung bevorzugter Ausführungsformen und der dazugehörigen Figuren verdeutlicht.

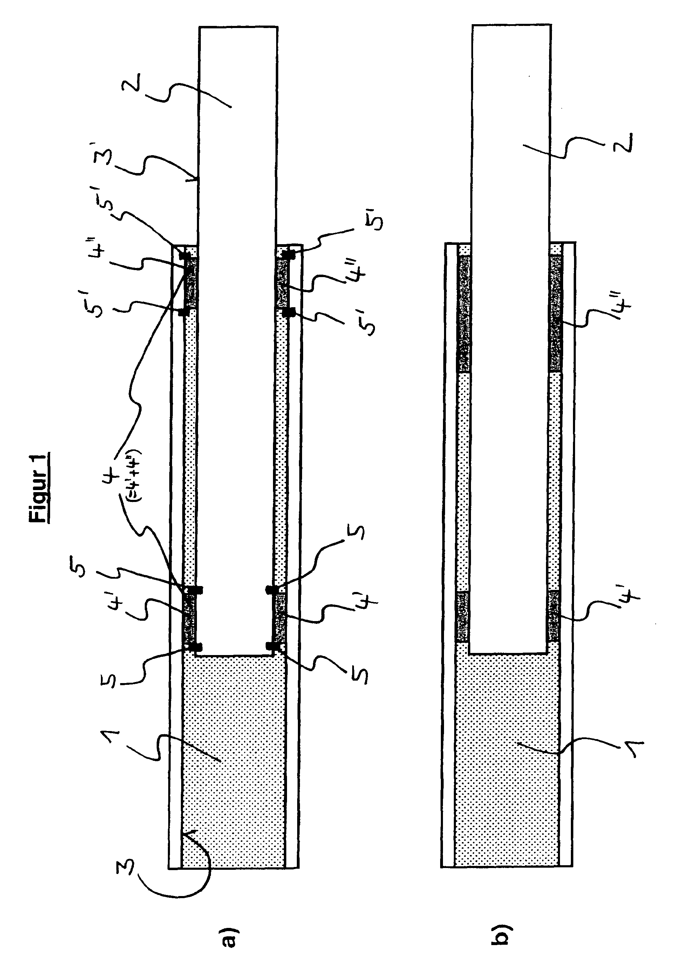

- Figur 1 a): zeigt schematisch eine Seitenansicht einer Teleskopschiene mit einer Außenschiene und einer Innenschiene, wobei vorgesehene Gleitelemente die gleiche Länge aufweisen,
- Figur 1 b): zeigt schematisch eine Seitenansicht einer Ausführungsform einer erfindungsgemäßen Teleskopschiene mit einer Außenschiene und einer Innenschiene,
- Figur 2 a): zeigt schematisch einen Querschnitt zur Längsachse der Teleskopschienen der Figuren 1a und b,

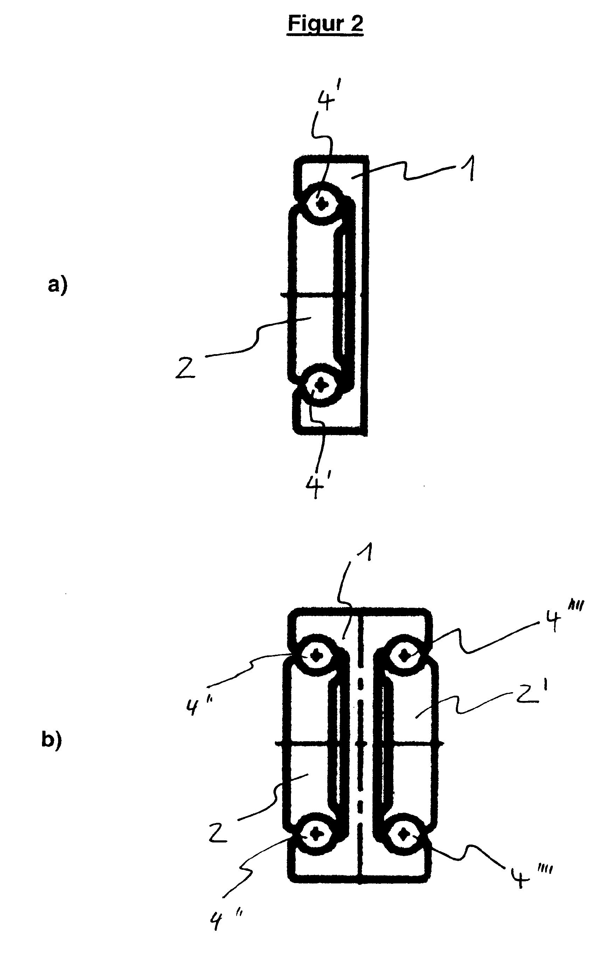

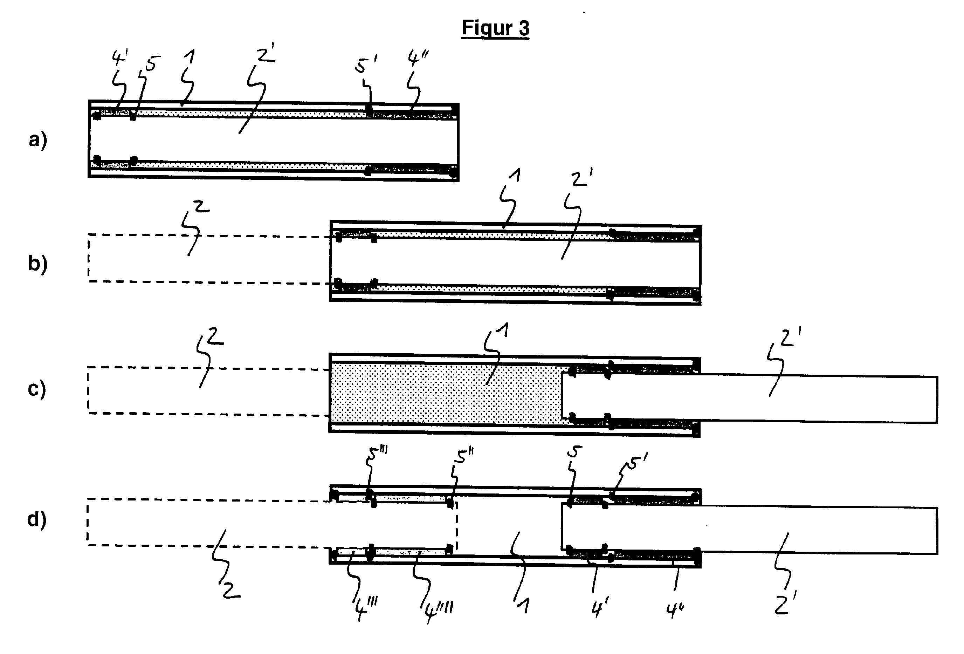

- Figur 2 b): zeigt schematisch einen Querschnitt zur Längsachse der Teleskopschiene der Figur 3,
- Figur 3: zeigt schematisch Seitenansichten einer weiteren Ausführungsform einer erfindungsgemäßen Teleskopschiene mit einer Außenschiene und zwei auf gegenüberliegenden Seiten der Außenschiene angeordneten Innenschienen in verschiedenen Auszugszuständen (Figuren 3a - 3d),

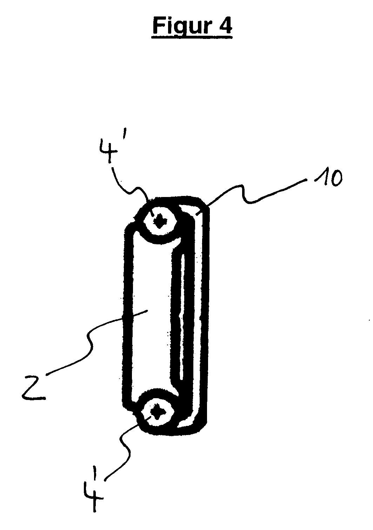

- Figur 4: zeigt schematisch einen Querschnitt zur Längsachse der Innenschiene einer erfindungsgemäßen Teleskopschiene mit Gleitereinzelelementen, die mit einem Verbindungsstück verbunden sind,
- Figur 5 a): zeigt schematisch Querschnitte durch eine erfindungsgemäße Teleskopschiene mit Gleitereinzelelementen in verschiedenen Phasen des Auszugs und
- Figur 5 b): zeigt schematisch Querschnitte durch eine herkömmliche Teleskopschiene mit einem einzelnen, nicht aufgeteilten Gleiter in verschiedenen Phasen des Auszugs.

Figur 1 zeigt in den Darstellungen a) und b) Teleskopschienen mit einer Außenschiene 1 und einer Innenschiene 2, wobei die Innenschiene 2 in der Außenschiene 1 geführt ist. Die Außenschiene 1 weist Stütz- bzw. Gleitflächen 3 auf, die entsprechenden Stütz- bzw. Gleitflächen 3' der Innenschiene 2 zugewandt sind. Zwischen den Stütz- bzw. Gleitflächen 3, 3' der Außen- und Innenschienen sind Gleiter 4 vorgesehen, die jeweils aus zwei separaten Gleitereinzelelementen 4' und 4" bestehen.

In Figur 1 a) besitzen die Gleitereinzelelemente 4', 4" jeweils im wesentlichen die gleiche Länge, wogegen die Gleitereinzelelemente 4', 4" in Figur 1 b) erfindungsgemäß unterschiedliche Längen in einem Verhältnis von etwa 2,3 zu 1 aufweisen.

In Figur 1 a) sind die Gleitereinzelelemente 4' über Fixierungselemente 5 an der Innenschiene 2 gegen ein Verschieben in Längsrichtung dieses Schienenelementes fixiert. Die Gleitereinzelelemente 4' sind in der Nähe des Endes der Innenschiene 2 fixiert, das entgegen der Richtung des Verfahrweges der Teleskopschiene gelegen ist. Die Gleitereinzelelemente 4" sind über Fixierungselemente 5' an der Außenschiene 1 gegen ein Verschieben in Längsrichtung dieses Schienenelementes fixiert. Die Gleitereinzelelemente 4" sind in der Nähe des Endes der Au-ßenschiene 1 fixiert, das in Richtung des Verfahrweges der Teleskopschiene gelegen ist.

Auch bei der in Figur 1 b) dargestellten Ausführungsform der erfindungsgemäßen Teleskopschiene sind die Gleitereinzelelemente 4' und 4" zweckmäßigerweise an den Innen- und Au-ßenschienenelementen gegen ein Verschieben in Längsrichtung des jeweiligen Schienenelementes fixiert. In Figur 1 b) sind keine Fixierungselemente dargestellt. Die Fixierung erfolgte hier durch kleben. Bei der Ausführungsform gemäß Figur 1 b) ist das längere der zwei Gleitereinzelelemente 4" in der Nähe desjenigen Endes des Außenschienenelementes 1 fixiert ist, das in Richtung des Verfahrweges der Teleskopschiene gelegen ist. Das kürzere der zwei Gleitereinzelelemente 4' ist in der Nähe desjenigen Endes des Innenschienenelementes 2 fixiert, das entgegen der Richtung des Verfahrweges der Teleskopschiene gelegen ist.

Figur 2a zeigt einen Querschnitt zur Längsachse der erfindungsgemäßen Teleskopschienen gemäß den Figuren 1 a) oder 1 b) durch die Gleitereinzelelemente 4'. Zwischen der Außenschiene 1 und die Innenschiene 2 sind die an den Gleit- bzw. Stützflächen angeordneten Gleitereinzelelemente 4' zu erkennen.

In den Figuren 3a-d ist eine dreiteilige erfindungsgemäße Teleskopschiene mit einer Außenschiene 1, einer Innenschiene 2 und einer weiteren Innenschiene 2' dargestellt, wobei die beiden Innenschienen 2 und 2' auf gegenüberliegenden Seiten der Außenschiene 1 angeordnet sind. In den verschiedenen Abbildungen 3 a) bis 3 b) ist die Teleskopschiene in verschiedenen Auszugszuständen dargestellt.

In Figur 3 a) sind lediglich die Außenschiene 1, die Innenschiene 2' und die dazwischen angeordneten Gleitereinzelelemente 4' und 4" sowie die Fixierungselemente 5 und 5' zu sehen.

In Figur 3 b) ist die Teleskopschiene mit ausgezogener Innenschiene 2 dargestellt. Die Innenschiene 2 ist in Figur 3 durch gestrichelte Linien gezeigt. Die Innenschiene 2' ist in Figur 3 b) vollständig in die Außenschiene 1 eingeschoben.

Figur 3 c) zeigt die Teleskopschiene mit vollständig ausgezogenen Innenschienen 2 und 2'.

Figur 3 d) zeigt die Teleskopschiene mit vollständig ausgezogenen Innenschienen 2 und 2', wie es auch in Figur 3 c) dargestellt ist, wobei hier jedoch die Darstellung so gewählt wurde, daß die zwischen den Innenschienen 2 und 2' befindliche Trennwand der Außenschiene 1 "durchsichtig" dargestellt wurde. Hierdurch ist die Innenschiene 2 vollständig zu erkennen, ebenso wie die auf der Seite der Innenschiene 2 befindlichen Gleitereinzelelemente 4''' und 4"" und Fixierungselemente 5" und 5'''.

Bei der in Figur 3 dargestellten erfindungsgemäßen Teleskopschiene ist die Innenschiene 2 als stationäres Schienenelement vorgesehen, wogegen die Außenschiene und die Innenschiene 2' verfahren werden. Dementsprechend sind bei dieser bevorzugten Ausführungsform auch die unterschiedlich langen Gleitereinzelelemente 5, 5', 5" und 5''' angeordnet und fixiert. Die kurzen Gleitereinzelelemente 4' sind mittels Fixierungselementen 5 in der nähe des Endes der Innenschiene 2' gegen ein Verschieben fixiert, welches entgegen der Richtung des Verfahrweges der Teleskopschiene gelegen ist. Die längeren Gleitereinzelelemente 4" sind mittels Fixierungselementen 5' in der nähe des Endes der Außenschiene 1 gegen ein Verschieben fixiert, welches in Richtung des Verfahrweges der Teleskopschiene gelegen ist. Auf der gegenüberliegenden Seite der Außenschiene 1 sind die kurzen Gleitereinzelelemente 4''' mittels Fixierungselementen 5''' in der nähe des Endes der Außenschiene 1 gegen ein Verschieben fixiert, welches entgegen der Richtung des Verfahrweges der Teleskopschiene gelegen ist. Die längeren Gleitereinzelelemente 4"" sind mittels Fixierungselementen 5" in der nähe des Endes der Innenschiene 2 gegen ein Verschieben fixiert, welches in Richtung des Verfahrweges der Teleskopschiene gelegen ist.

In Figur 2 b) ist ein Querschnitt zur Längsachse der Teleskopschiene mit eingefahrenen Innenschienen 2, 2' gemäß Figur 3 a) durch die Gleitereinzelelemente 4" und 4"" dargestellt.

In Figur 4 ist eine alternative Ausführungsform der Erfindung dargestellt, bei der die Gleitereinzelelemente 4', die an den Stütz- bzw. Gleitflächen des Innenschienenelementes 2 angeordnet sind, über ein Verbindungsstück 10 miteinander verbunden sind.

Figuren 5 a) und b) zeigen schematische Querschnitte durch eine erfindungsgemäße Teleskopschiene (Figur 5 a)) bzw. eine herkömmliche Teleskopschiene (Figur 5 b)) in verschiedenen Phasen des Auszugs (1. - 11.). In Figur 5 a) ist ein Schienenelement mit zwei separaten Gleitereinzelementen dargestellt, die sich in den Gleitereinzelelementbereichen 8' und 8" befinden. Das Gleitereinzelelement im Bereich 8' ist an der Innenschiene 2 fixiert. Das Gleitereinzelelement im Bereich 8" ist an der Außenschiene 1 fixiert. Der Lastangriffspunkt 7 liegt in der Mitte der Länge der Innenschiene 2. Beim Auszug der Teleskopschiene (2. - 11.) bewegt sich die Innenschiene 2 mit dem im Bereich 8' fixierten Gleitereinzelelement von rechts nach links. In dieselbe Richtung wandert dementsprechend auch der Lastangriffspunkt 7. In den Stadien 1. - 8. befindet sich der Lastangriffspunkt 7 in dem Bereich, der von den Gleitereinzelelementen in den Bereichen 8' und 8" umfaßt wird und liegt erst in den Phasen 9., 10. und 11. außerhalb dieses Bereichs. Das Gleitereinzelelement im Bereich 8' stützt in jeder Phase des Auszugs das hintere Ende der Innenschiene 2 gegen die Außenschiene 1 ab, wobei das Gleitereinzelelement im Bereich 8" stets am vorderen Ende der Außenschiene 1 verbleibt. Hierdurch wird im Gegensatz zur herkömmlichen Teleskopschiene in jeder Phase 1. - 11. des Auszugs die in Bezug auf den Abschnitt der Innenschiene 2, der noch in der Außenschiene 1 verbleibt, maximale Abstützung der Innenschiene 2 gegen die Außenschiene 1 gewährleistet. Hierdurch wird eine optimale Abstützung der Innenschiene in vertikaler Richtung erreicht. Wir die erfindungsgemäße Teleskopschiene beispielsweise für Schubladenauszüge verwendet, so wird hierdurch gewährleistet, daß die Schubladenfronten im eingeschobenen und teilweise ausgezogenen Zustand in vertikaler Richtung sehr stabil gelagert sind und bei hoher Belastung nicht nach unten abkippen. Dies ist bei herkömmlichen Teleskopschienen, wie solchen gemäß Figur 5 b) aufgrund der stets vorhandenen Toleranzen zwischen Innen- und Außenschiene und aufgrund der Lagerung z.B. im eingefahrenen Zustand etwa in der Mitte der Schienenelemente nicht gewährleistet. Darüber hinaus gewährleistet die erfindungsgemäße Anordnung der Gleitereinzelelemente nicht nur optimale Abstützung in vertikaler Richtung, sondern auch hohe Seitenstabilität.

Figur 5 b) zeigt schematisch Querschnitte durch eine Teleskopschiene aus dem Stand der Technik mit einem einzelnen, nicht aufgeteilten Gleiter (z.B. einem Kugelkäfig) in verschiedenen Phasen des Auszugs (1. - 11.). Der nicht dargestellte Gleiter befindet sich in dem Gleiterbereich 6. Die Auflage- bzw. Kontaktfläche des einzelnen, nicht aufgeteilten Gleiters ist gleich groß wie die Auflage- bzw. Kontaktfläche der Summe aller Gleitereinzelelemente der in Figur 5 a) dargestellten Teleskopschiene. Der Lastangriffspunkt 7 liegt in der Mitte der Längsachse der Innenschiene 2. Beim Auszug der Teleskopschiene (2. - 11.) bewegt sich die Innenschiene 2 von rechts nach links. In dieselbe Richtung wandert dementsprechend auch der Lastangriffspunkt 7 und der Gleiterbereich 6. Bei dieser herkömmlichen Teleskopschiene befindet sich der Lastangriffspunkt 7 nur in den Stadien 1. - 8. im Gleiterbereich 6.

Für alle dargestellten Figuren gilt, daß der Fachmann ohne weiteres den schematischen Charakter der Zeichnungen erkennen wird, so daß er sich bei der Ausführung der vorliegenden Erfindung beispielsweise nicht an exakte Abmessungen, Größenverhältnisse und Schichtdikken, wie sie in den Figuren dargestellt sind, gebunden fühlen wird. Bei der Ausführung der Erfindung ergeben sich die entsprechenden vorteilhaften Abmessungen, Größenverhältnisse und Schichtdicken aus den jeweiligen technischen Anforderungen und der Beschaffenheit der verwendeten Materialien.

### Bezugszeichenliste:

- 1: Außenschiene
- 2: Innenschiene
- 3: Stütz- oder Gleitfläche
- 4: Gleiter bzw. Gleitereinzelelemente
- 5: Fixierungselemente
- 6: Gleiterbereich
- 7: Lastangriffspunkt
- 8: Gleitereinzelelementbereich

## Patentansprüche

1. Teleskopschiene mit wenigstens zwei in Längsrichtung gegeneinander verschiebbaren Schienenelementen, welche wenigstens eine Außenschiene (1) und wenigstens eine Innenschiene (2) umfassen, wobei die Schienenelemente Stütz- bzw. Gleitflächen (3, 3') aufweisen und wobei zwischen den Stütz- bzw. Gleitflächen (3, 3') von jeweils zwei gegeneinander verschiebbar angeordneten Schienenelementen Gleiter (4) vorgesehen sind, die wenigstens zwei separate Gleitereinzelelemente (4', 4") aufweisen, **dadurch gekennzeichnet, daß** die zwei separaten Gleitereinzelelemente (4', 4"), die zwischen zwei Stütz- bzw. Gleitflächen (3, 3') zweier Schienenelemente vorgesehen sind, in Längsrichtung der Schienenelemente ungleiche Längen aufweisen und vorzugsweise ein Längenverhältnis zueinander von 2 : 1 bis 9 : 1 haben, wobei das längere der zwei separaten Gleitereinzelelemente (4', 4") an dem bzw. in der Nähe des Endes eines Schienenelementes (1, 2) fixiert ist, das in Richtung des Verfahrweges der Teleskopschiene gelegen ist, und das kürzere der zwei separaten Gleitereinzelelemente (4', 4") an dem bzw. in der Nähe des Endes eines Schienenelementes (1, 2) fixiert ist, das entgegen der Richtung des Verfahrweges der Teleskopschiene gelegen ist.

2. Teleskopschiene nach Anspruch 1, **dadurch gekennzeichnet, daß** jeder Gleiter (4), der zwischen zwei Stütz- bzw. Gleitflächen (3, 3') zweier Schienenelemente vorgesehen ist, genau zwei separate Gleitereinzelelemente (4', 4") aufweist.

3. Teleskopschiene nach einem der Ansprüche 1 und 2, **dadurch gekennzeichnet, daß** die Gleitereinzelelemente (4', 4"), die zwischen den Stütz- bzw. Gleitflächen (3, 3') der Schienenelemente (1, 2) angeordnet sind, sich in Längsrichtung der Schienenelemente (1, 2) erstrecken und im Querschnitt ein Außenprofil aufweisen, das im wesentlichen den entsprechenden Anlageflächen der Stütz- bzw. Gleitflächen (3, 3') angepaßt ist.

4. Teleskopschiene nach einem der Ansprüche 1 bis 3, **dadurch gekennzeichnet, daß** die Teleskopschiene eine Außenschiene (1) aufweist, in der eine erste Innenschiene (2) und eine zweite Innenschiene (2') auf jeweils einander gegenüberliegenden Seiten der Au-ßenschiene (1) geführt sind.

5. Teleskopschiene nach einem der Ansprüche 1 bis 4, **dadurch gekennzeichnet, daß** die Schienenelemente aus Metall, vorzugsweise aus Aluminium hergestellt sind.

6. Teleskopschiene nach einem der Ansprüche 1 bis 5, **dadurch gekennzeichnet, daß** die Gleiter (4) aus Metall, vorzugsweise aus Messing hergestellt sind.

7. Teleskopschiene nach einem der Ansprüche 1 bis 5, **dadurch gekennzeichnet, daß** die Gleiter (4) aus Kunststoff, vorzugsweise aus Polytetrafluorethylen (PTFE), Polyoxymethylen/Polyacetat (POM) oder Polyamid hergestellt sind.

8. Teleskopschiene nach einem der Ansprüche 1 bis 7, **dadurch gekennzeichnet, daß** die Gleitereinzelelemente (4', 4"), die an einem Schienelement (1, 2, 2') auf gegenüberliegenden Stütz- oder Gleitflächen (3, 3') dieses Schienenelements (1, 2, 2') angeordnet sind, über ein Verbindungsstück (10) miteinander verbunden sind.

## Claims

1. A telescopic rail comprising at least two rail elements which are displaceable in the longitudinal direction relative to each other and which include at least one outer rail (1) and at least one inner rail (2), wherein the rail elements have support or sliding surfaces (3, 3') and wherein sliders (4) which have at least two separate individual slider elements (4', 4") are provided between the support or sliding surfaces (3, 3') of each two rail elements which are arranged displaceably relative to each other, **characterised in that** the two separate individual slider elements (4', 4") which are provided between two support or sliding surfaces (3, 3') of two rail elements are of unequal lengths in the longitudinal direction of the rail elements and are preferably of a length ratio relative to each other of 2:1 1 to 9:1, wherein the longer of the two separate individual slider elements (4', 4") is fixed to or in the proximity of the end of a rail element (1, 2) which is disposed in the direction of the path of travel of the telescopic rail and the shorter of the two separate individual slider elements (4', 4") is fixed to in the proximity of the end of the rail element (1, 2) which is disposed in opposite relationship to the direction of the path of travel of the telescopic rail.

2. A telescopic rail according to claim 1 **characterised in that** each slider (4) provided between two support or sliding surfaces (3, 3') of two rail elements has precisely two separate individual slider elements (4', 4").

3. A telescopic rail according to one of claims 1 and 2 **characterised in that** the individual slider elements (4', 4") arranged between the support or sliding surfaces (3, 3') of the rail elements (1, 2) extend in the longitudinal direction of the rail elements (1, 2) and in cross-section are of an outside profile which is substantially adapted to the corresponding contact surfaces of the support or sliding surfaces (3, 3').

4. A telescopic rail according to one of claims 1 to 3 **characterised in that** the telescopic rail has an outer rail (1) in which a first inner rail (2) and a second inner rail (2') are guided on respective mutually opposite sides of the outer rail (1).

5. A telescopic rail according to one of claims 1 to 4 **characterised in that** the rail elements are made from metal, preferably aluminium.

6. A telescopic rail according to one of claims 1 to 5 **characterised in that** the sliders (4) are made from metal, preferably brass.

7. A telescopic rail according to one of claims 1 to 5 **characterised in that** the sliders (4) are made from plastic material, preferably polytetrafluoroethylene (PTFE), polyoxymethylene/polyacetate (POM) or polyamide.

8. A telescopic rail according to one of claims 1 to 7 **characterised in that** the individual slider elements (4', 4") which are arranged at a rail element (1, 2, 2') on mutually opposite support or sliding surfaces (3, 3') of said rail element (1, 2, 2') are connected together by way of a connecting portion (10).

## Revendications

1. Glissière télescopique comportant au moins deux éléments de glissière qui sont mobiles l'un par rapport à l'autre dans la direction longitudinale et qui comportent au moins une glissière extérieure (1) et au moins une glissière intérieure (2), les éléments de glissière présentant des surfaces d'appui respectivement de glissement (3, 3') et des patins (4), qui comportent au moins deux éléments de patin individuels séparés (4', 4"), disposés entre les surfaces d'appui respectivement de glissement (3, 3') placées de façon à pouvoir coulisser l'une par rapport à l'autre, **caractérisée en ce que** les deux éléments de patin individuels séparés (4', 4''), qui sont disposés entre deux surfaces d'appui respectivement de glissement (3, 3') de deux éléments de glissière, ont des longueurs différentes dans la direction longitudinale des éléments de glissière et ont avantageusement un rapport de longueurs allant de 2:1 à 9:1, le plus long des deux éléments de patin individuels (4', 4") étant fixé à l'extrémité respectivement à proximité de l'extrémité d'un élément de glissière (1, 2) qui est placé dans la direction du déplacement de la glissière télescopique et le plus court des deux éléments de patin individuels (4', 4") étant fixé à l'extrémité respectivement à proximité de l'extrémité d'un élément de glissière (1, 2) qui est placé dans la direction opposée au déplacement de la glissière télescopique.

2. Glissière télescopique selon la revendication 1, **caractérisée en ce que** chaque patin (4), qui est disposé entre deux surfaces d'appui respectivement de glissement (3, 3') de deux éléments de glissière, comporte exactement deux éléments de patin individuels séparés (4', 4'').

3. Glissière télescopique selon l'une des revendications 1 et 2, **caractérisée en ce que** les éléments de patin individuels (4', 4"), qui sont placés entre les surfaces d'appui respectivement de glissement (3, 3') des éléments de glissière (1, 2), s'étendent dans la direction longitudinale des éléments de glissière (1, 2) et ont en coupe transversale un profil extérieur qui est sensiblement adapté aux faces de contact correspondantes des surfaces d'appui respectivement de glissement (3, 3').

4. Glissière télescopique selon l'une des revendications 1 à 3, **caractérisée en ce que** la glissière télescopique comporte une glissière extérieure (1) dans laquelle une première glissière intérieure (2) et une deuxième glissière intérieure (2') sont guidées sur des côtés, opposés l'un à l'autre, de la glissière extérieure (1).

5. Glissière télescopique selon l'une des revendications 1 à 4, **caractérisée en ce que** les éléments de glissière sont fabriqués en métal, avantageusement en aluminium.

6. Glissière télescopique selon l'une des revendications 1 à 5, **caractérisée en ce que** les patins (4) sont fabriqués en métal, avantageusement en laiton.

7. Glissière télescopique selon l'une des revendications 1 à 5, **caractérisée en ce que** les patins (4) sont fabriqués en matière plastique, avantageusement en polytétrafluoroéthylène (PTFE), en polyoxyméthylène (POM)/polyacétate ou en polyamide.

8. Glissière télescopique selon l'une des revendications 1 à 7, **caractérisée en ce que** les éléments de patin individuels (4', 4"), qui sont placés au niveau d'un élément de glissière (1, 2, 2') sur des surfaces d'appui ou glissement opposées (3, 3') de cet élément de glissière (1, 2, 2'), sont reliés par une pièce de liaison (10).
